# EUROPÄISCHE PATENTSCHRIFT

(11) **EP 1 028 915 B1**
(45) Veröffentlichungstag und Bekanntmachung des Hinweises auf die Patenterteilung: **23.05.2001**
(21) Anmeldenummer: 98959721.6
(22) Anmeldetag: 06.10.1998
(51) Int. Cl.: C01B 31/00

(54) **GASSPEICHER**
GAS ACCUMULATOR
ACCUMULATEUR DE GAZ

(30) Priorität: 10.10.1997 DE 19745549
(43) Veröffentlichungstag der Anmeldung: 23.08.2000
(73) Patentinhaber: MANNESMANN Aktiengesellschaft, 40213 Düsseldorf (DE)
(72) Erfinder: KLOS, Holger, D-76185 Karlsruhe (DE); SCHMITZ, Ulrich, D-81543 München (DE); SCHÜTZ, Walter, D-95266 Weidenberg (DE)
(74) Vertreter: Meissner, Peter E., Dipl.-Ing.
(86) Internationale Anmeldenummer: DE9803012
(87) Internationale Veröffentlichungsnummer: WO9919253

(56) Entgegenhaltungen:
- WO-A-97/26082

## Beschreibung

Die vorliegende Erfindung betrifft einen Gasspeicher für die Speicherung von Druckgas, der einen geschlossenen Behälter aufweist, wobei dieser Behälter mit mindestens einer ventilbetätigten Zu- und Ableitung für das Druckgas, sowie mit einer Teilchenfüllung aus Carbon-Nanostrukturen versehen ist.

insbesondere die Speicherung von Wasserstoff in normalen Druckbehältern bereitet große Schwierigkeiten, wenn bezogen auf das Behältervolumen eine möglichst große Fülldichte erzielt werden soll. Es ist allgemein bekannt, daß Gasspeicher, in denen Hydrid bildende Metallegierungen in feinteiliger Form eingefüllt sind, eine besonders hohe Speicherkapazität besitzen. Diese Gasspeicher haben jedoch erhebliche Nachteile, insbesondere wegen ihres hohen Gesamtgewichts.

In jüngerer Zeit sind Vorschläge bekannt geworden, zur Speicherung von Gasen, insbesondere von Wasserstoff, sogenannte Carbon-Nanostrukturen zu verwenden, die chemiesorbierende Eigenschaften aufweisen. Ein solcher Vorschlag ist der WO 97/26082 entnehmbar. Dort ist erwähnt, daß je nach vorliegender Temperatur und Druck bis zu 24 Liter Wasserstoff je Gramm des eingesetzten Carbon-Nanostrukturmaterials gespeichert werden können. Im Hinblick auf die technische Gestaltung des Gasspeichers ist lediglich ausgeführt, daß der Behälter mit einem Wasserstoffspeicherbett versehen ist. Angaben über die Einfülldichte des Nanostrukturmaterials werden nicht gemacht.

Bei vielen Anwendungen, in denen gespeicherter Wasserstoff verwendet werden soll, kommt es darauf an, bei einem möglichst kleinen Speichervolumen und Speichergewicht des Gasspeichers eine möglichst große Gasmenge einspeichern zu können (möglichst hohe spezifische Speicherkapazität). Diese Forderung gilt insbesondere für mobile Anwendungen, also etwa bei Wasserstofftanks für Fahrzeuge, die mit Brennstoffzellen betrieben werden. Daher besteht ein Bedarf, die bisher erreichbare Speicherkapazität von Gasspeichern für Druckgase, insbesondere Wasserstoff, weiter zu erhöhen.

Aufgabe der Erfindung ist es daher, einen Gasspeicher der eingangs genannten Art dahingehend weiterzubilden, daß seine spezifische Speicherkapazität deutlich erhöht wird.

Gelöst wird diese Aufgabe durch einen Gasspeicher der eingangs genannten Art, bei dem erfindungsgemäß die Teilchen der Carbon-Nanostrukturen zu größeren zusammenhängenden Konglomeraten mit gegenüber der Scheindichte der ursprünglich losen Teilchen erhöhter Scheindichte verdichtet sind.

Der Grundgedanke der vorliegenden Erfindung ist darin zu sehen, daß durch die aus Carbon-Nanostrukturen bestehende Speichermasse im Gasspeicher eine Erhöhung der Speicherkapazität für das Druckgas erzeugt wird, indem in das vorgegebene Speichervolumen des Gasspeichers mehr Nanostrukturmaterial eingebracht wird, als dies bisher durch einfaches Einfüllen der ursprünglich hergestellten Carbonteilchen mit Nanostruktur möglich war. Dies wird dadurch erreicht, daß die ursprünglichen Teilchen der Carbon-Nanostrukturen, wie sie sich aus dem Herstellprozeß ergeben, zu größeren zusammenhängenden Konglomeraten verdichtet werden, so daß sich für dieses Konglomerat eine Scheindichte (d.h. das auf das Volumen des Konglomerats bezogene Gewicht) ergibt, die deutlich größer ist als die Scheindichte der ursprünglich erzeugten losen Teilchen mit Nanostruktur.

Dadurch ist der erfindungsgemäße Gasspeicher sowohl für stationäre als auch für mobile Anwendungen einsetzbar. Insbesondere eignet sich der erfindungsgemäße Gasspeicher für die Speicherung von gasförmigen Treibstoffen, wie beispielsweise Wasserstoff oder dergleichen.

Bevorzugte Ausführungsformen des Gasspeichers ergeben sich aus den Unteransprüchen.

Erfindungsgemäß können die Carbon-Nanostrukturen als Nanofasern (Nanofibres) oder Nanoröhrchen (Nanotubes) oder Nanoschuppen (Nanoshells) ausgebildet sein. Bevorzugt sind die Carbon-Nanostrukturen jedoch als Nanofasern ausgebildet. Im folgenden wird insbesondere auf diese Ausgestaltungsform eingegangen. Jedoch ist die Erfindung nicht auf die Ausgestaltung der Carbon-Nanostrukturen als Nanofasern beschränkt.

Carbon-Nanofasern können beispielsweise eine Länge von bis zu 10 µm und einen äußeren Durchmesser zwischen 20 und 140 nm aufweisen. Die Carbon-Nanofasern können beispielsweise einzelne Graphitebenen aufweisen, wobei diese Graphitebenen vorteilhaft einen definierten Winkel (z.B. 45° oder 90°) zur Faserachse aufweisen. Zwischen den Graphitebenen wird der Wasserstoff gespeichert.

In bevorzugter Ausgestaltung sind die Carbon-Nanostrukturen helixförmig ausgebildet. Diese helixförmige Struktur kann beispielhaft mit der Form einer "Wendeltreppe" beschrieben werden. Die helixförmigen Carbon-Nanofasern weisen somit zunächst eine äußere in einer Längsrichtung verlaufende Struktur in Form der Schraubenlinie und zusätzlich eine innere Struktur auf. Diese innere Struktur, die in dem exemplarischen Beispiel der "Wendeltreppe" die einzelnen "Treppenstufen" bilden würde, umfaßt die weiter oben beschriebenen einzelnen Graphitebenen, in denen das Druckgas, beispielsweise der Wasserstoff, gespeichert wird. Eine solche Struktur hat wegen ihrer vielen Kanten (edges) erhebliche Vorteile hinsichtlich der Speicherbe- und -entladung.

Eine weitere vorteilhafte Art der Carbon-Nanostrukturen ist röhrchenförmig aufgebaut mit einem Außendurchmesser von beispielsweise 35 nm und einem Innendurchmesser von beispielsweise 10 nm, so daß die Wanddicke in einer Größenordnung von etwa 10 nm liegt. Die innere Struktur der Fasern weist Graphitebenen auf, die fischgrätenartig angeordnet sind. Dabei können die Graphitebenen teilweise über den inneren Hohlraum hinweg mit der gegenüberliegenden Seite brückenartig verbunden sein.

Um eine vorteilhafte Speicherung von Druckgas zu erreichen, ist in weiterer Ausgestaltung vorgesehen, daß die Carbon-Nanostrukturen aktiviert sind. Eine solche Aktivierung hat die Funktion, die Carbon-Nanostrukturen aufzubrechen, damit das Druckgas anschließend in den einzelnen Graphitebenen der inneren Struktur eingelagert werden kann.

Die Einlagerung des Druckgases, und hier beispielsweise des Wasserstoffs, kann physikalisch oder chemisch in analoger Form wie bei Metallhydriden erfolgen.

Vorteilhaft erfolgt die Aktivierung der Carbon-Nanostrukturen bei erhöhter Temperatur durch ein Reaktionsgas, das beispielsweise aus der Gruppe der Gase CO, CO₂, Helium oder Dämpfen der Alkalimetalle, Erdalkalimetalle oder dergleichen ausgewählt ist. Natürlich sind je nach Bedarf und Anwendungsfall auch andere Reaktionsgase denkbar und möglich. Die Aktivierungsbehandlung kann aber auch mit entsprechenden Stoffen auf naßchemischem Wege vorgenommenen werden.

Erfindungsgemäß können die Carbon-Nanostrukturen unter Luftabschluß hergestellt und/oder aktiviert und/oder in den Gasspeicher eingebracht werden oder sein. Dadurch kann die Zyklenfestigkeit der Carbon-Nanostrukturen im späteren Speichereinsatz erhöht werden.

Im Hinblick auf die mögliche Verdichtung der Carbon-Nanostrukturen werden nachfolgend generell zwei exemplarische Wege beschrieben.

Gemäß einer ersten Ausführungsform der Erfindung sind die Carbon-Nanostrukturen zur Bildung der Konglomerate in ihrer Ausrichtung untereinander geordnet. Vorzugsweise wird diese Ordnung dadurch erreicht, daß die Carbon-Nanostrukturen in ihrer Längsausrichtung zueinander im wesentlichen gleichgerichtet angeordnet sind.

Eine Teilchenausrichtung, die prinzipiell auch auf rein mechanischem Wege erfolgen kann, kann beispielsweise durch Ausnutzung elektrostatischer Effekte bewirkt werden. Andere Möglichkeiten stellen das aus der Polymerphysik grundsätzlich bekannte Aufrakeln auf Oberflächen oder das Spin-Coating-Verfahren dar. Eine Ausrichtung und gleichzeitige Erzielung einer höheren Dichte durch Ausbildung übergeordneter kristalliner Strukturen läßt sich auch durch das ebenfalls aus der Polymerphysik bekannte Tempern bewirken. Nach einem bevorzugten Verfahrensweg sieht die Erfindung bei Carbon-Nanostrukturen, die in Form von Nanofasern oder Nanoröhrchen ausgebildet sind, eine Verdichtung durch Verspinnung vor.

Ein Ausrichten der Carbon-Nanostrukturen, insbesondere faserartiger Carbon-Nanostrukturen, führt zu einem dichteren makroskopischen Gebinde. Insbesondere können durch eine geeignete Ordnung die Zwischenräume zwischen den einzelnen Carbon-Nanostrukturen minimiert werden, wodurch sich insgesamt eine Erhöhung der Scheindichte der Carbon-Nanostrukturen ergibt.

Durch eine Ordnung der Carbon-Nanostrukturen ist es weiterhin möglich, eine durch die Beladung mit Druckgas auftretende Expansion der Carbon-Nanostrukturen gezielt zu beherrschen. Während sich ungeordnete Fasern beispielsweise in drei Dimensionen ausdehnen, dehnen sich erfindungsgemäß geordnete Fasern im wesentlichen nur in einer Dimension aus. Der Ausdehnung in nur einer Dimension kann jedoch durch entsprechendes Befüllen des Behälters mit den Carbon-Nanostrukturen auf einfache Weise Rechnung getragen werden.

Vorteilhaft können die Konglomerate durch zusätzliches Pressen der geordneten Carbon-Nanostrukturen gebildet sein. Die Verpressung gewährleistet eine mechanische Verkettung der Carbon-Nanostrukturen. Der Verpressungsdruck beträgt vorteilhaft mehr als 1 bar.

Gemäß einer weiteren Ausführungsform sind die Konglomerate durch Pressen von ungeordneten Carbon-Nanostrukturen gebildet. Diese Verpressung kann beispielsweise durch einfaches Formpressen des Materials erfolgen. Grundsätzlich können aus den ungeordneten Carbon-Nanostrukturen Presslinge in jeder beliebigen Form und Größe verpreßt werden.

In vorteilhafter Ausgestaltung können die Konglomerate in Form von Pellets gepreßt sein. Vorzugsweise sind diese Pellets kugelförmig oder tablettenförmig ausgebildet, so daß sie beim Einfüllen in den Druckgasbehälter ein gutes Fließverhalten haben.

Die Herstellung der Pellets kann beispielsweise über ein geeignetes Stanzpreß- oder Strangpreßverfahren erfolgen. Im Stanzpreßverfahren werden bevorzugt kugelförmige Pellets hergestellt, die eine leichte Schüttrieselfähigkeit während der Herstellung des Gasspeichers gewährleisten. Beim Strangpreßverfahren werden bevorzugt zylindrische oder quaderförmige Pellets hergestellt.

Erfindungsgemäß kann die Feststoff-Füllung aus Pellets unterschiedlicher Größe und/oder Geometrie zusammengesetzt sein. Dadurch kann eine besonders hohe Einfülldichte erzielt werden, da das verbleibende nicht von Festkörpern ausgefüllte Volumen innerhalb des Behälters minimal ist.

In weiterer Ausgestaltung können die ungeordneten oder geordneten Carbon-Nanostrukturen als scheibenförmige Körper mit einer dem Querschnitt des Behälters entsprechenden Grundfläche ausgebildet und im Behälter übereinander gestapelt sein. Dadurch kann durch ein Aufeinanderstapeln der einzelnen Scheiben praktisch das gesamte Behältervolumen ausgefüllt werden.

Vorteilhaft für die Dynamik des Be- und Entladen des Gasspeichers ist es, wenn beim Herstellen der scheibenförmigen Körper - beispielsweise durch Pressen - gasleitende Strukturen (insbesondere an der Oberfläche) in diese eingearbeitet werden. Derartige Strukturen können beispielsweise vorstehende Stege sein, die als Abstandhalter zwischen den Scheiben dienen, oder auch eingearbeitete Nuten, durch die bevorzugt das Gas strömen kann. Die Scheiben können auch mit durchgehenden Löchern versehen sein, die Strömungswege für das Gas darstellen. Wenn derartige Löcher koaxial hintereinander in den einzelnen Scheiben angeordnet sind, kann durch einen auf die Art und Weise geschaffenen Kanal zweckmäßigerweise auch ein Filterrohr in den Behälter eingeführt werden, das an die ventilbestückte Zu- und Ableitung für das Gas (Zu- und Ableitung können auch körperlich getrennt sein) angeschlossen ist.

Durch das Verpressen des Carbon-Nanostrukturmaterials kann es je nach angewendeter Verdichtung zur Ausbildung einer Preßhaut auf der Oberfläche der erzeugten Konglomerate kommen. Eine solche Preßhaut ist für das Diffusionsverhalten des Materials bzgl. des zu speichernden Gases nachteilig. Es empfiehlt sich daher, in einem solchen Fall die erzeugten Konglomerate einer die Gasdiffusion verbessernden chemischen Oberflächenbehandlung zu unterziehen. Eine solche Behandlung kann vorteilhaft auf naßchemischem oder auf trockenchemischem Weg durch Oxidation etwa mittels O₂, CO₂, H₂O oder ähnlich wirkenden Medien durchgeführt werden.

Erfindungsgemäß kann weiterhin ein Hüllelement vorgesehen sein, das die aus geordneten oder ungeordneten Carbon-Nanostrukturen gebildeten Konglomerate einzeln umgibt. Insbesondere, wenn die Carbon-Nanostrukturen geordnet und nicht verpreßt sind, kann durch ein geeignetes Hüllelement, das beispielsweise als Schlauch ausgebildet ist, erreicht werden, daß die Expansion der Carbon-Nanostrukturen während des Beladens mit Druckgas gerichtet in nur einer Dimension - nämlich der Längsrichtung der Carbon-Nanostrukturen- erfolgt.

Erfindungsgemäß können die Carbon-Nanostrukturen zur Bildung der Konglomerate in einer Matrix, vorzugsweise einer gasdurchlässigen Matrix, eingebettet sein. Bei dem verwendeten Matrixmaterial handelt es sich vorzugsweise um gasoffene Kammer-, Poren- oder Einbettungssysteme. Denkbar ist beispielsweise eine Einbettung in ein Polymer, etwa in Styropor, das sowohl eine mikroskopische Bindung der Carbon-Nanostrukturen, als auch eine makroskopische Einlagerung in Styroporporen gewährleistet. Als Matrixmaterial können auch gasoffene Binder verwendet werden.

Erfindungsgemäß kann die Scheindichte der aus den ursprünglichen losen Teilchen des Carbon-Nanostrukturmaterials hergestellten Konglomerate mindestens auf das 1,5-fache, vorzugsweise mindestens auf das 2-fache der ursprünglichen Scheindichte erhöht werden. Üblicherweise liegt die ursprüngliche Scheindichte bei etwa 1,0 g/cm³, so daß die anzustrebenden Werte bei der Verdichtung vorzugsweise bei Mindestdichten von 1,5 bzw. 2,0 g/cm³ liegen.

Überraschenderweise bleibt die auf das Gewicht des Carbon-Nanostrukturmaterials bezogene Speicherkapazität trotz der erfolgten Verdichtung weitestgehend erhalten. Dies führt dazu, daß sich die Speicherkapazität bezogen auf das Volumen des erfindungsgemäß ausgeführten Gasspeichers im wesentlichen entsprechend dem Anstieg der Scheindichte der Konglomerate erhöht.

Mit der erfindungsgemäßen Verdichtung der Carbon-Nanostrukturen ist noch ein wesentlicher Vorteil verbunden. Dieser besteht darin, daß die einzelnen Teilchen zwangsläufig zusammengehalten werden, so daß damit beim Entladen des Gasspeichers einem unerwünschten Austragen von kleinsten Partikeln mit dem entnommenen Gasstrom entgegengewirkt wird. Das Entweichen von Partikeln in nachgeschaltete Aggregate oder in die Umwelt könnte nämlich unter Umständen zu technischen Problemen führen oder gegen Emmissionsvorschriften bzgl. Kleinstpartikel verstoßen.

In weiterer Ausgestaltung kann an der Zuleitung und/oder der Ableitung für das Druckgas zusätzlich wenigstens ein Filterelement, vorzugsweise ein Mikrofilter vorgesehen sein. Das unerwünschte Austragen von Partikeln wird durch die Verwendung derartiger Filter noch weiter reduziert. Bei den Mikrofiltern besteht das Material vorzugsweise aus wasserstoffresistenten Materialien, beispielsweise aus gasoffenen anorganischen oder organischen Polymerfolien, Keramikmaterialien, inerten gasoffenen gesinterten Stählen oder dergleichen.

## Patentansprüche

1. Gasspeicher für die Speicherung von Druckgasen, mit einem geschlossenen Behälter, der mit mindestens einer ventilbetätigten Zu- und Ableitung für das Druckgas sowie mit einer Feststoff-Füllung aus Carbon-Nanostrukturen versehen ist,
dadurch gekennzeichnet,
daß die Teilchen der Carbon-Nanostrukturen zu größeren zusammenhängenden Konglomeraten mit gegenüber der Scheindichte der ursprünglich losen Teilchen erhöhter Scheindichte verdichtet sind.

2. Gasspeicher nach Anspruch 1,
dadurch gekennzeichnet,
daß die Carbon-Nanostrukturen als Nanofasern oder Nanoröhrchen oder Nanoschuppen ausgebildet sind.

3. Gasspeicher nach Anspruch 1 oder 2,
dadurch gekennzeichnet,
daß die Carbon-Nanostrukturen helixförmig ausgebildet sind.

4. Gasspeicher nach einem der Ansprüche 1 bis 3
dadurch gekennzeichnet,
daß die Carbon-Nanostrukturen aktiviert sind.

5. Gasspeicher nach Anspruch 4,
dadurch gekennzeichnet,
daß die Carbon-Nanostrukturen durch ein Reaktionsmittel aktiviert sind, wobei das Reaktionsmittel vorzugsweise aus der Gruppe der Alkalimetalle, Erdalkalimetalle, CO, CO₂, Helium ausgewählt ist.

6. Gasspeicher nach einem der Ansprüche 1 bis 5,
dadurch gekennzeichnet,
daß die Carbon-Nanostrukturen unter Luftabschluß hergestellt und/oder aktiviert und/oder in den Gasspeicher eingebracht sind.

7. Gasspeicher nach einem der Ansprüche 1 bis 6,
dadurch gekennzeichnet,
daß die Carbon-Nanostrukturen zur Bildung der Konglomerate in ihrer Ausrichtung untereinander geordnet, insbesondere in ihrer Längsausrichtung im wesentlichen gleich zueinander ausgerichtet sind.

8. Gasspeicher nach Anspruch 7,
dadurch gekennzeichnet,
daß die als Nanofasern oder Nanoröhrchen ausgebildeten Carbon-Nanostrukturen durch Verspinnung verdichtet sind.

9. Gasspeicher nach Anspruch 7 oder 8,
dadurch gekennzeichnet,
daß die Konglomerate durch zusätzliches Pressen der geordneten Carbon-Nanostrukturen gebildet sind.

10. Gasspeicher nach einem der Ansprüche 1 bis 6,
dadurch gekennzeichnet,
daß die Konglomerate durch Pressen von ungeordneten Carbon-Nanostrukturen gebildet sind.

11. Gasspeicher nach Anspruch 10,
dadurch gekennzeichnet,
daß die Konglomerate in Form von Pellets gepreßt sind und daß die Pellets insbesondere tablettenförmig oder kugelförmig ausgebildet sind.

12. Gasspeicher nach Anspruch 11,
dadurch gekennzeichnet,
daß die Feststoff-Füllung aus Pellets unterschiedlicher Größe und/oder Geometrie zusammengesetzt ist.

13. Gasspeicher nach einem der Ansprüche 7 bis 10,
dadurch gekennzeichnet,
daß die ungeordneten oder geordneten Carbon-Nanostrukturen als scheibenförmige Körper mit einer dem Querschnitt des Behälters entsprechenden Grundfläche ausgebildet und im Behälter übereinander gestapelt sind.

14. Gasspeicher nach Anspruch 13,
dadurch gekennzeichnet,
daß in die Oberfläche der scheibenförmigen Körper gasleitende Strukturen eingearbeitet sind.

15. Gasspeicher nach einem der Ansprüche 1 bis 14,
dadurch gekennzeichnet,
daß ein Hüllelement vorgesehen ist, das die aus geordneten oder ungeordneten Carbon-Nanostrukturen gebildeten Konglomerate einzeln umgibt.

16. Gasspeicher nach einem der Ansprüche 1 bis 15,
dadurch gekennzeichnet,
daß die Konglomerate zur Entfernung einer Preßhaut einer die Gasdiffusion verbessernden chemischen Oberflächenbehandlung unterzogen worden sind.

17. Gasspeicher nach Anspruch 16,
dadurch gekennzeichnet,
daß die Oberflächen der Konglomerate einer naßchemischen oder trockenchemischen Oxidationsbehandlung mit O₂, CO₂, H₂O oder ähnlich wirkenden Medien unterzogen worden sind.

18. Gasspeicher nach einem der Ansprüche 1 bis 17,
dadurch gekennzeichnet,
daß die Carbon-Nanostrukturen zur Bildung der Konglomerate in einer Matrix, vorzugsweise einer gasdurchlässigen Matrix, eingebettet sind.

19. Gasspeicher nach einem der Ansprüche 1 bis 18,
dadurch gekennzeichnet,
daß die Scheindichte der Konglomerate auf mindestens das 1,5-fache der ursprünglichen Scheindichte erhöht ist.

20. Gasspeicher nach Anspruch 19,
dadurch gekennzeichnet,
daß die Scheindichte der Konglomerqate auf mindestens das 2-fache der ursprünglichen Scheindichte erhöht ist.

21. Gasspeicher nach einem der Ansprüche 1 bis 20,
dadurch gekennzeichnet,
daß in der Zuleitung und/oder der Ableitung für das Druckgas wenigstens ein Filterelement, vorzugsweise ein Mikrofilter, vorgesehen ist.

## Claims

1. A gas storage means for storing compressed gases, having a closed container, which is provided with at least one valve-actuated feed and outlet line for the compressed gas together with a solids packing of carbon nanostructures,
characterised in that
the carbon nanostructure particles are compacted into larger cohesive conglomerates with an apparent density which is increased relative to the apparent density of the originally loose particles.

2. A gas storage means according to claim 1,
characterised in that
the carbon nanostructures take the form of nanofibres or nanotubes or nanoshells.

3. A gas storage means according to claim 1 or claim 2,
characterised in that
the carbon nanostructures are helical in form.

4. A gas storage means according to one of claims 1 to 3,
characterised in that
the carbon nanostructures are activated.

5. A gas storage means according to claim 4,
characterised in that
the carbon nanostructures are activated by a reactant, the reactant preferably being selected from the group comprising alkali metals, alkaline earth metals, CO, CO₂, helium.

6. A gas storage means according to one of claims 1 to 5,
characterised in that
the carbon nanostructures are produced and/or activated and/or introduced into the gas storage means under the exclusion of air.

7. A gas storage means according to one of claims 1 to 6,
characterised in that,
to form the conglomerates, the carbon nanostructures are ordered mutually in their orientation, in particular are oriented substantially identically to one another in their longitudinal orientation.

8. A gas storage means according to claim 7,
characterised in that
the carbon nanostructures in the form of nanofibres or nanotubes are compacted by spinning.

9. A gas storage according to claim 7 or claim 8,
characterised in that
the conglomerates are formed by additional pressing of the ordered carbon nanostructures.

10. A gas storage means according to one of claims 1 to 6,
characterised in that
the conglomerates are formed by pressing of unordered carbon nanostructures.

11. A gas storage means according to claim 10,
characterised in that
the conglomerates are pressed into the form of pellets and in that the pellets are in particular tablet-shaped or spherical.

12. A gas storage means according to claim 11,
characterised in that
the solids packing is composed of pellets of varying sizes and/or geometry.

13. A gas storage means according to one of claims 7 to 10,
characterised in that
the unordered or ordered carbon nanostructures take the form of disk-like bodies with a base corresponding to the cross section of the container and are stacked one above the other in the container.

14. A gas storage means according to claim 13,
characterised in that
gas-conveying structures are incorporated into the surface of the disk-shaped bodies.

15. A gas storage means according to one of claims 1 to 14,
characterised in that
a sheath element is provided, which individually surrounds the conglomerates formed of ordered or unordered carbon nanostructures.

16. A gas storage means according to one of claims 1 to 15,
characterised in that
the conglomerates have been subjected to a gas diffusion-improving chemical surface treatment to remove a pressing skin.

17. A gas storage means according to claim 16,
characterised in that
the surfaces of the conglomerates have been subjected to a wet-chemical or dry-chemical oxidation treatment with O₂, CO₂, H₂O or similarly acting media.

18. A gas storage means according to one of claims 1 to 17,
characterised in that,
to form the conglomerates, the carbon nanostructures are embedded in a matrix, preferably a gas-permeable matrix.

19. A gas storage means according to one of claims 1 to 18,
characterised in that
the apparent density of the conglomerates is increased to at least 1.5 times the original apparent density.

20. A gas storage means according to claim 19,
characterised in that
the apparent density of the conglomerates is increased to at least 2 times the original apparent density.

21. A gas storage means according to one of claims 1 to 20,
characterised in that
at least one filter element, preferably a microfilter, is provided in the feed line and/or the outlet line for the compressed gas.

## Revendications

1. Accumulateur de gaz pour stocker des gaz sous pression, comportant un récipient fermé, qui est muni d'au moins un conduit d'amenée et d'un conduit d'évacuation actionnés par valve pour le gaz sous pression, ainsi que d'un remplissage de matière solide constitué de nanostructures de carbone,
caractérisé en ce que les particules des nanostructures de carbone sont comprimées en conglomérats plus gros communicants ayant une densité apparente plus élevée par rapport à la densité apparente des particules initialement lâches.

2. Accumulateur de gaz selon la revendication 1,
caractérisé en ce que les nanostructures de carbone sont réalisées comme nanofibres ou nanotubes ou nanopaillettes.

3. Accumulateur de gaz selon la revendication 1 ou 2,
caractérisé en ce que les nanostructures de carbone sont réalisées sous forme hélicoïdale.

4. Accumulateur de gaz selon une des revendications 1 à 3,
caractérisé en ce que les nanostructures de carbone sont activées.

5. Accumulateur de gaz selon la revendication 4,
caractérisé en ce que les nanostructures de carbone sont activées par un agent réactionnel, l'agent réactionnel étant avantageusement choisi dans le groupe des métaux alcalins, des métaux alcalino-terreux, CO, CO₂, l'hélium.

6. Accumulateur de gaz selon une des revendications 1 à 5,
caractérisé en ce que les nanostructures de carbone sont fabriquées et/ou activées et/ou sont disposées dans l'accumulateur de gaz à l'abri de l'air.

7. Accumulateur de gaz selon une des revendications 1 à 6,
caractérisé en ce que les nanostructures de carbone, pour former les conglomérats, ordonnées les unes par rapport aux autres concernant leur orientation, en particulier concernant leur orientation longitudinale, sont orientées de façon généralement identique les unes par rapport aux autres.

8. Accumulateur de gaz selon la revendication 7,
caractérisé en ce que les nanostructures de carbone, réalisées comme nanofibres ou nanotubes, sont comprimées par filage.

9. Accumulateur de gaz selon la revendication 7 ou 8,
caractérisé en ce que les conglomérats sont formés par pressage supplémentaire des nanostructures de carbone ordonnées.

10. Accumulateur de gaz selon une des revendications 1 à 6,
caractérisé en ce que les conglomérats sont formés par pressage de nanostructures de carbone non ordonnées.

11. Accumulateur de gaz selon la revendication 10,
caractérisé en ce que les conglomérats sont pressés sous forme de boulettes, et en ce que les boulettes sont réalisées en particulier sous forme sphérique ou de tablettes.

12. Accumulateur de gaz selon la revendication 11,
caractérisé en ce que le remplissage de matière solide est constitué de boulettes ayant des tailles et/ou géométries différentes.

13. Accumulateur de gaz selon une des revendications 7 à 10,
caractérisé en ce que les nanostructures de carbone ordonnées ou non ordonnées sont réalisées comme corps en forme de disque ayant une surface de base correspondant à la section transversale du récipient et sont empilées les unes sur les autres dans le récipient.

14. Accumulateur de gaz selon la revendication 13,
caractérisé en ce que des structures de guidage de gaz sont prévues dans la surface des corps en forme de disque.

15. Accumulateur de gaz selon une des revendications 1 à 14,
caractérisé en ce qu'il est prévu un élément d'enveloppe qui entoure individuellement les conglomérats formés à partir de nanostructures de carbone ordonnées ou non ordonnées.

16. Accumulateur de gaz selon une des revendications 1 à 15,
caractérisé en ce que les conglomérats, pour éliminer une peau de pressage, ont été soumis à un traitement de surface chimique améliorant la diffusion du gaz.

17. Accumulateur de gaz selon la revendication 16,
caractérisé en ce que les surfaces des conglomérats ont été soumises à un traitement d'oxydation chimique par voie humide ou par voie sèche avec O₂, CO₂, H₂O ou des agents agissant de façon analogue.

18. Accumulateur de gaz selon une des revendications 1 à 17,
caractérisé en ce que les nanostructures de carbone, pour former les conglomérats, sont noyées dans une matrice, avantageusement une matrice perméable aux gaz.

19. Accumulateur de gaz selon une des revendications 1 à 18,
caractérisé en ce que la densité apparente des conglomérats est augmentée à au moins 1,5 fois la densité apparente initiale.

20. Accumulateur de gaz selon la revendication 19,
caractérisé en ce que la densité apparente des conglomérats est augmentée à au moins 2 fois la densité apparente initiale.

21. Accumulateur de gaz selon une des revendications 1 à 20,
caractérisé en ce que, dans le conduit d'amenée et/ou le conduit d'évacuation pour le gaz sous pression, il est prévu au moins un élément de filtrage, avantageusement un microfiltre.
